# FASCICULE DE BREVET EUROPEEN

(11) **EP 0 735 942 B1**
(45) Date de publication et mention de la délivrance du brevet: **03.03.1999**
(21) Numéro de dépôt: 95903837.3
(22) Date de dépôt: 15.12.1994
(51) Int. Cl.: B29C 44/60

(54) **INSTALLATION ET PROCEDE DE DISTRIBUTION D'UN PRODUIT FLUIDE AVEC RESERVOIR ET BUSE**
EINRICHTUNG UND VERFAHREN ZUM AUSGEBEN EINES RIESELFÄHIGEN PRODUKTS MIT BEHÄLTER UND DÜSE
PLANT AND PROCESS FOR THE DISTRIBUTION OF A FLUID PRODUCT, COMPRISING A TANK AND A NOZZLE

(30) Priorité: 21.12.1993 FR 9315670
(43) Date de publication de la demande: 09.10.1996
(73) Titulaire: SEVA, société dite,, F-71100 Chalon-sur-Saône (FR)
(72) Inventeur: THOMAS, Dominique, F-71200 Le-Creusot (FR)
(74) Mandataire: Puit, Thierry
(86) Numéro de dépôt international: FR9401468
(87) Numéro de publication internationale: WO9517289

(56) Documents cités:
- EP-A- 0 509 323
- EP-A- 0 574 051
- US-A- 3 873 258
- US-A- 4 144 986
- US-A- 4 535 919
- US-A- 4 613 059

## Description

La présente invention est relative à la technique de distribution de produit fluide tel que mousseux, liquide ou gazeux, dans laquelle on extrude ledit produit, généralement par une mise en pression régulée du produit dans une buse.

La technique de distribution d'un fluide à une pression régulée (voir par exemple le document US-A-3 873 258) est particulièrement avantageuse par rapport à une projection classique de fluide, pour réaliser des pièces en mousse, donc expansibles, à une dimension et une densité constantes dans une ou plusieurs directions ; en effet la pression commandera l'expansion de la mousse et donc la dimension de la pièce résultant de l'extrusion.

Dans la technique classique il existe deux approches :
1) L'installation d'un régulateur de pression mécanique en amont de la buse.
   Cette manière de faire présente les inconvénients suivants :
   - le régulateur de pression est volumineux et donc difficile à installer sur un robot ;
   - il possède des espaces morts où le produit se dégrade dans le temps et rend le composant inefficace.
2) L'autre solution consiste à faire varier l'ouverture de la buse en fonction de la pression à l'intérieur de celui-ci (voir US 3 873 258).

Cette solution présente l'inconvénient d'être encombrante et très coûteuse.

Dans les deux cas, il faut une régulation de température précise pour les produits dont la viscosité varie avec ce paramètre.

Le document US-A-4 144 986 décrit un dispositif dans lequel il est prévu une pompe à vis d'Archimède pour le produit visqueux contenu dans un fût. Le contrôle de cette vis ne vise qu'à augmenter plus ou moins le débit du produit visqueux : la pompe est en quelque sorte une pompe volumétrique pour extraire le matériau du vide-fût. De plus, la régulation du débit de produit est réalisée en amont, c'est-à-dire à la sortie du vide-fût, négligeant ainsi toutes les difficultés, notamment les pertes de charge, liées au transport sous pression dans la tuyauterie d'alimentation de la buse.

L'invention a pour but de remédier à ces inconvénients, de façon qu à l'ouverture de la buse, la pression soit exactement à la pression donnant le bon débit et que celle-ci reste constante.

Une telle installation de distribution de produit fluide est du type comportant au moins un réservoir fermé par un plateau coulissant lié à la tige d'un vérin, une pompe de mise en pression du fluide, montée sur ladite tige en continuité du réservoir, et d'où part une tuyauterie d'alimentation d'au moins une buse comprenant un moyen de fermeture et de réglage de l'ouverture de ladite buse, ladite installation comportant une armoire électrique de commande comprenant une carte électronique conventionnelle. A tout moment, le système électronique ajuste l'ouverture de la buse de manière à obtenir une pression constante et permet donc d'avoir un débit constant quelle que soit la pression amont du produit.

Selon l'invention, le vérin étant relié à une commande équipée d'un régulateur lui-même relié électriquement à la carte électronique, la buse est reliée audit régulateur par l'intermédiaire d'un capteur de pression monté sur ladite buse et relié également à ladite carte électronique.

Suivant d'autres caractéristiques,
- la buse est un pistolet ;
- le moyen de fermeture et de réglage de l'ouverture de la buse est un piston ;

Afin d'éviter l'apparition d'un temps de réponse plus ou moins important entre le signal électrique vers le régulateur de pression et la mesure au capteur de pression de la buse qui pourrait survenir en fonction de la compressibilité du produit et l'élasticité du circuit, le moyen d'ouverture et de réglage de l'ouverture est relié à un régulateur de vitesse. Ce dernier contrôle l'ouverture de la buse pour que sa cinématique soit toujours identique et répétable. Cela permet d'ajuster la régulation du circuit.

De plus, le circuit de fluide formé par le réservoir, la pompe, la tuyauterie et la buse est étanche lorsque la buse est obturée et le vérin est un vérin hydraulique double tige.

L'invention a également pour objet un procédé d'extrusion d'un matériau compressible sous pression, du type suivant lequel, à partir d'un réservoir contenant ledit matériau, on pompe et met en pression le matériau pour alimenter une buse d'extrusion via une tuyauterie, caractérisé en ce que l'on mesure la pression du matériau dans la buse, on compare cette pression à la valeur de la pression en mémoire dans une carte électronique et on ajuste la pression du matériau dans la tuyauterie grâce à l'action de la carte électronique sur le moyen de mise en pression du matériau.

Suivant une autre caractéristique du procédé, on maintient constante la pression du matériau dans la buse.

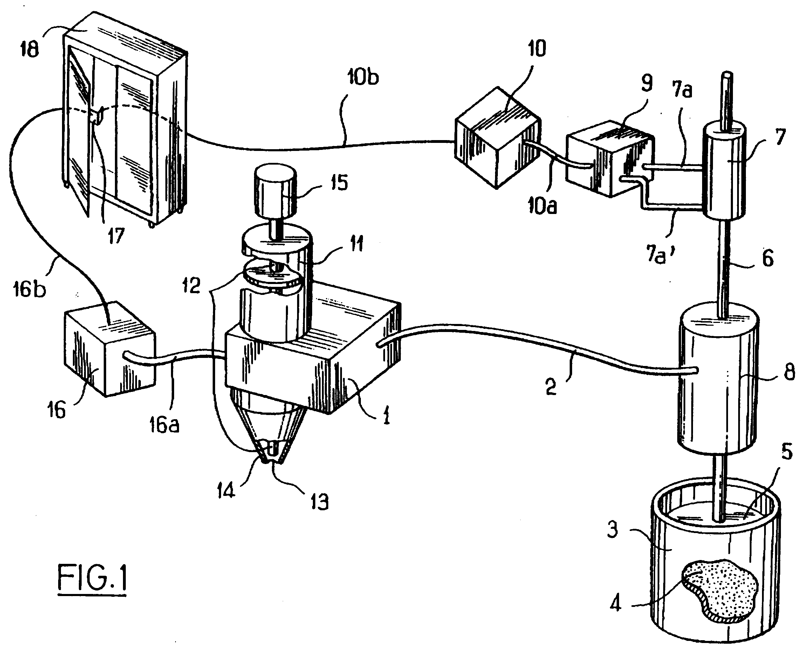

Un exemple non limitatif de mise en oeuvre de l'invention va maintenant être décrit en regard du dessin annexé, dont la figure unique représente schématiquement une installation d'extrusion d'une mousse d'étanchéité conforme à l'invention.

L'installation représentée comprend une buse d'extrusion 1 reliée via une tuyauterie 2 à un réservoir 3 de mousse 4.

Le réservoir 3 est fermé par un plateau coulissant 5 lié à une tige 6 d'un vérin hydraulique 7 à double tige. Une pompe 8 est montée sur ladite tige 6 en continuité du réservoir 3 et de la tuyauterie 2.

Le vérin hydraulique 7 est relié par des tubes d'alimentation 7a, 7a' à une commande 9 équipée d'un régulateur de pression proportionnel 10 muni d'un tube 10a de circulation du liquide de mise en pression du vérin 7. Un vérin 11 est monté sur la buse 1. La tige 12 du vérin 11 est le piston d'ouverture de la buse. L'ouverture 13 de la buse 1 se situe à l'extrémité d'un logement tronconique 14 coaxiale au piston 12.

Un régulateur de vitesse 15 est relié au vérin 11. Un capteur de pression 16 muni d'un tube de mousse 4 sous pression est monté sur la buse 1 et relié électriquement, via un câble électrique 16b à une carte électronique 17 contenue dans une armoire électrique 18 reliée par le câble électrique 10b au régulateur de pression 10 du vérin 7.

Le fonctionnement de l'installation est le suivant :

Le système de vide-fût, constitué de la pompe 8, du vérin 7, de la commande 9 et du régulateur proportionnel 10, pompe la mousse 4 et la met sous pression grâce à la pompe 8. La mousse 4 arrive à la buse 1 au travers de la tuyauterie 2.

La buse 1 fermée, la mousse est maintenue sous pression par la pompe 8.

Le capteur de pression 16 de la buse convertit la pression de la mousse mesurée dans la buse 1 en signal électrique.

Le signal électrique est envoyé pour le câble 16b à la carte électronique 17 qui le compare à la consigne et ajuste immédiatement la pression d'huile du vérin 7 grâce à la commande hydraulique 9.

Ainsi, à l'ouverture de la buse 1, la pression est exactement à la pression donnant le bon débit et celle-ci reste constante car les pertes de charge sont compensées par l'hydraulique.

L'ouverture se fait par la montée du piston 12. Le logement 14 étant tronconique et coaxial au piston. Plus la montée du piston 12 est importante, plus la sortie de mousse 4 et donc le débit peuvent être importants.

Le régulateur de vitesse 15 contrôle l'ouverture 13 de la buse 1 pour que sa cinématique soit toujours identique et répétable. Cela permet d'ajuster la régulation du circuit en fonction de la compressibilité de la mousse et l'élasticité du circuit et, compense l'éventuel temps de réponse plus ou moins ïmportant entre le signal électrique vers le régulateur de pression 10 et la mesure au capteur de pression 16 de la buse 1.

Cette installation permet de déposer des produits visqueux à plus de 300 bars de pression.

## Revendications

1. Installation de distribution de produit fluide tel que mousseux, liquide ou gazeux, du type comportant au moins un réservoir (3) fermé par un plateau coulissant (5) lié à une tige (6) d'un vérin (7), une pompe (8) de mise en pression du fluide, montée sur ladite tige (6) en continuité du réservoir (3), et d'où part une tuyauterie d'alimentation (2) d'au moins une buse (1) comprenant un moyen de fermeture et de réglage de l'ouverture de ladite buse (1), ladite installation comportant une armoire électrique (18) de commande comprenant une carte électronique (17) conventionnelle, caractérisée en ce que le vérin (7) étant relié à une commande (9) équipée d'un régulateur (10) lui-même relié électriquement à la carte électronique (17), la buse (1) est reliée audit régulateur (10) par l'intermédiaire d'un capteur de pression (16) monté sur ladite buse et relié également à ladite carte électronique (17).

2. Installation suivant la revendication 1, dans laquelle la buse (1) est un pistolet.

3. Installation suivant la revendication 1 ou 2, dans laquelle le moyen de fermeture et de réglage de l'ouverture de la buse (1) est un piston (12)

4. Installation suivant l'une quelconque des revendications précédentes, dans laquelle le moyen d'ouverture et de réglage de l'ouverture est relié à un régulateur de vitesse (15).

5. Installation suivant l'une quelconque des revendications précédentes, dans laquelle le circuit de fluide formé par le réservoir (3), la pompe (8), la tuyauterie (2) et la buse (1) est étanche lorsque la buse (1) est fermée.

6. Installation suivant l'une quelconque des revendications précédentes, dans laquelle le vérin 7 est un vérin hydraulique double tige.

7. Procédé d'extrusion d'un matériau compressible (4) sous pression, au moyen d'une installation conforme à l'une quelconque des revendications précédentes, du type suivant lequel, à partir d'un réservoir contenant ledit matériau (4), on pompe et met en pression le matériau (4) pour alimenter une buse d'extrusion (1) via une tuyauterie (2), caractérisé en ce que l'on mesure la pression du matériau dans la buse (1), on compare cette pression à la valeur de la pression en mémoire dans une carte électronique (17) et on ajuste la pression du matériau (4) dans la tuyauterie (2) grâce à l'action de la carte électronique sur le moyen de mise en pression du matériau.

8. Procédé suivant la revendication 7, dans lequel on maintient constante la pression du matériau (4) dans la buse (1).

## Claims

1. Installation for dispensing a fluid product, such as a foam, liquid or gaseous product, of the type including at least one reservoir (3) closed by a sliding plate (5) linked to a rod (6) of an actuating cylinder (7), a pump (8) for pressurizing the fluid, which pump is mounted on the said rod (6) in continuity with the reservoir (3) and from which departs a line (2) for supplying at least one nozzle (1) comprising a means for closing and regulating the opening of the said nozzle (1), the said installation including an electrical control cabinet (18) comprising a conventional electronic board (17), characterized in that, with the actuating cylinder (7) being connected to a control (9) equipped with a regulator (10) itself electrically connected to the electronic board (17), the nozzle (1) is connected to the said regulator (10) by way of a pressure sensor (16) mounted on the said nozzle and likewise connected to the said electronic board (17).

2. Installation according to Claim 1, in which the nozzle (1) is a gun.

3. Installation according to Claim 1 or 2, in which the means for closing and regulating the opening of the nozzle (1) is a piston (12).

4. Installation according to any one of the preceding claims, in which the means for opening and regulating the opening is connected to a speed regulator (15).

5. Installation according to any one of the preceding claims, in which the fluid circuit formed by the reservoir (3), the pump (8), the line (2) and the nozzle (1) is leaktight when the nozzle (1) is closed.

6. Installation according to any one of the preceding claims, in which the actuating cylinder 7 is a double-rod hydraulic actuating cylinder.

7. Method for extruding a compressible material (4) under pressure, by means of an installation according to any one of the preceding claims, of the type according to which, from a reservoir containing the said material (4), the material (4) is pumped and pressurized in order to supply an extrusion nozzle (1) via a line (2), characterized in that the pressure of the material in the nozzle (1) is measured, this pressure is compared with the value of the pressure stored in an electronic board (17) and the pressure of the material (4) in the line (2) is adjusted by the action of the electronic board on the means for pressurizing the material.

8. Method according to Claim 7, in which the pressure of the material (4) in the nozzle (1) is kept constant.

## Patentansprüche

1. Vorrichtung zur Verteilung eines fluiden wie schaumförmigen, flüssigen oder gasförmigen Produkts des Typs, welcher mindestens einen Vorratsbehälter (3), der mit einem mit der Kolbenstange (6) eines Zylinders (7) verbundenen hin- und hergehenden Deckel (5) verschlossen ist, eine Pumpe (8), um das Fluid unter Druck zu setzen, die in Verlängerung des Vorratsbehälters (3) ohne Unterbrechung an dieser Kolbenstange (6) angebracht ist und von welcher eine Leitung (2) für mindestens eine Düse (1) abgeht, die ein Mittel zum Verschließen und Regeln der Öffnung der Düse (1) enthält, und einen elektrischen Schaltschrank (18) umfaßt, der eine herkömmliche gedruckte Schaltung (17) enthalt, **dadurch gekennzeichnet, daß** der Zylinder (7) mit einer Steuerung (9) verbunden ist, die mit einem Regler (10) ausgestattet ist, der seinerseits an die gedruckte Schaltung (17) elektrisch angeschlossen ist, wobei die Düse (1) mit dem Regler (10) über einen Druckmeßfühler (16) verbunden ist, der an dieser Düse angebracht und ebenfalls an die gedruckte Schaltung (17) angeschlossen ist.

2. Vorrichtung nach Anspruch 1, in welcher die Düse (1) eine Spritzpistole ist.

3. Vorrichtung nach Anspruch 1 oder 2, in welcher das Mittel zum Verschließen und Regeln der Öffnung von Düse (1) ein Kolben (12) ist.

4. Vorrichtung nach einem der vorhergehenden Ansprüche, in welcher das Mittel zum Öffnen und Regeln der Öffnung mit einem Geschwindigkeitsregler (15) verbunden ist.

5. Vorrichtung nach einem der vorhergehenden Ansprüche, in welcher der von Vorratsbehälter (3), Pumpe (8), Leitung (2) und Düse (1) gebildete Kreislauf dicht ist, wenn die Düse (1) verschlossen ist.

6. Vorrichtung nach einem der vorhergehenden Ansprüche, in welcher der Zylinder (7) ein Hydraulikzylinder mit doppeltwirkender Kolbenstange ist.

7. Verfahren zum Aufspritzen eines unter Druck komprimierbaren Materials (4) mittels einer Vorrichtung entsprechend einem der vorhergehenden Ansprüche des Typs, gemäß welchem das Material (4) aus einem dieses Material (4) enthaltenden Vorratsbehälter gepumpt und unter Druck gesetzt wird, um über eine Leitung (2) eine Spritzdüse (1) zu versorgen, **dadurch gekennzeichnet, daß** der Materialdruck in der Düse (1) gemessen, dieser Druck mit dem in einer gedruckten Schaltung (17) gespeicherten Druckwert verglichen und der Druck des Materials (4) in der Leitung (2) eingestellt wird, indem die gedruckte Schaltung auf das Mittel zum Unter-Druck-Setzen des Materials einwirkt.

8. Verfahren nach Anspruch 7, in welchem der Druck des Materials (4) in der Düse (1) konstantgehalten wird.
